# EUROPEAN PATENT APPLICATION

(11) **EP 4 559 303 A1**
(43) Date of publication of application: **28.05.2025**
(21) Application number: 24211993.1
(22) Date of filing: 11.11.2024
(51) Int. Cl.: A01D 46/30

(54) **HARVESTING DEVICE**

(30) Priority: 22.11.2023 JP 2023197805; 21.08.2024 JP 2024139804
(71) Applicant: Yanmar Holdings Co., Ltd., Osaka-shi, Osaka (JP)
(72) Inventor: YOKOUE, Toshiyuki, Osaka-shi (JP); KUGA, Toru, Osaka-shi (JP); SAIKI, Miyuki, Osaka-shi (JP)
(74) Representative: Dennemeyer & Associates S.A.

(57) **Abstract**

[Problem] To provide a harvesting device that reliably separates a peduncle to harvest a fruit.

[Solution] A harvesting device 100 includes a cutting unit 1, a moving mechanism 2, a first detection unit 3, and a drive unit 14. The cutting unit 1 is a component for cutting a peduncle Fs. The moving mechanism 2 moves a cutting unit 1 in such a front-rear direction D1 as to approach and separate the peduncle Fs. The first detection unit 3 is a component for detecting that the peduncle Fs is within a cuttable range P1. The drive unit 14 moves the cutting unit 1 toward the cuttable range P1 in a case where the first detection unit 3 detects that the peduncle Fs is within the cuttable range P1.

## Description

### TECHNICAL FIELD

The present invention relates to a harvesting device.

### BACKGROUND ART

Conventionally, a harvesting device that harvests a fruit by using a robotic arm is known. For example, in a state in which a fruit vegetable harvesting device in Patent Document 1 holds a fruit vegetable (i.e., a fruit) on a suction pad of a holding unit, the fruit vegetable harvesting device moves a finger part of a harvesting hand toward a peduncle and rotates the finger part around the axis of the holding unit. When a contact part of the finger part comes into contact with the peduncle, a detection lever of the contact part receives pressing force and rotates. By this rotation, the fruit vegetable harvesting device detects the contact of the contact part with the peduncle. In addition, when the fruit vegetable harvesting device detects contact, the fruit vegetable harvesting device further rotates the holding unit and the finger part around the axis of the holding unit. Consequently, the peduncle breaks off due to pressing force from the contact part, and the fruit is separated from a branch and harvested.

### PRIOR ART DOCUMENT

### PATENT DOCUMENT

Patent Document 1: Japanese Patent Laid-open No. 2020-184935

### SUMMARY OF INVENTION

### TECHNICAL PROBLEM

However, in Patent Document 1, the holding unit that holds the fruit is rotated around the axis to separate the fruit with the broken peduncle from the branch. Therefore, in a case where it is difficult to separate the peduncle at a pressing portion with the contact part, it becomes difficult to harvest the fruit. Furthermore, in a case where the peduncle cannot be separated at the pressing portion, there is a risk that the fruit cannot be harvested due to the loss of holding. There is also a risk of damaging a fruit tree. Alternatively, there is a risk that a calyx is separated from the fruit, and a commercial value of the harvested fruit is reduced or eliminated.

In view of the above circumstances, an object of the present invention is to provide a harvesting device that reliably separates a peduncle to harvest a fruit.

### SOLUTION TO PROBLEM

In order to achieve the above object, a harvesting device according to an aspect of the present invention includes a cutting unit, a moving mechanism, a first detection unit, and a drive unit. The cutting unit is a component for cutting a peduncle. The moving mechanism moves the cutting unit in a front and rear direction to approach and separate from the peduncle. The first detection unit is a component for detecting that the peduncle is within a cuttable range. The drive unit moves the cutting unit toward the cuttable range in a case where the first detection unit detects that the peduncle is within the cuttable range.

Further features and advantages of the present invention will become clearer from the following embodiments.

### ADVANTAGEOUS EFFECTS OF INVENTION

According to the present invention, it is possible to provide a harvesting device that reliably separates a peduncle to harvest a fruit.

### BRIEF DESCRIPTION OF DRAWINGS

FIG. 1 is an external view illustrating a configuration example of a harvesting device according to a first embodiment.
FIG. 2 is a block diagram illustrating a configuration example of a control system of the harvesting device according to the first embodiment.
FIG. 3 is an enlarged top view of a vicinity of a cutting unit in the first embodiment.
FIG. 4 is an enlarged bottom view of the vicinity of the cutting unit in the first embodiment.
FIG. 5 is a side view of the cutting unit and a holding unit in the first embodiment as viewed from the left side.
FIG. 6 is a schematic diagram illustrating a configuration of a modification of scissors of the cutting unit.
FIG. 7 is an enlarged top view of a vicinity of a cutting unit in a second embodiment.
FIG. 8 is a block diagram illustrating a configuration example of a control system of the harvesting device according to the second embodiment.
FIG. 9 is a perspective view illustrating a configuration example of a cutting unit and a tip of a moving mechanism in a third embodiment.
FIG. 10 is a sectional view illustrating an example of a connection structure between a hinge and arms in the third embodiment.
FIG. 11 is an enlarged top view of a vicinity of the cutting unit in the third embodiment.
FIG. 12 is an enlarged bottom view of the vicinity of the cutting unit in the third embodiment.
FIG. 13 is a block diagram illustrating a configuration example of a control system of the harvesting device according to the third embodiment.
FIG. 14 is a schematic diagram illustrating an example of conduction between a pair of electrodes when a pair of blade units are closed in a first practical example.
FIG. 15 is schematic diagram illustrating an another example of conduction between the pair of electrodes when the pair of blade units are closed in the first practical example.
FIG. 16 is a schematic diagram illustrating a measurement example of a linear interval between a pair of handles using a distance sensor in the second practical example.
FIG. 17 is a schematic diagram illustrating an example of a circumferential angle interval between the pair of handles in a second practical example.

### DESCRIPTION OF EMBODIMENTS

Hereinafter, embodiments of the present invention will be described with reference to the drawings. The direction in which a cutting unit 1 advances and retreats to approach and separate from a peduncle Fs is hereinafter referred to as the "front-rear direction D1." In the front-rear direction D1, the direction in which the cutting unit 1 advances to approach the peduncle Fs is referred to as the "front direction D1a," and the direction in which the cutting unit 1 retreats to separate from the peduncle Fs is referred to as the "rear direction D1b." That is, the front-rear direction D1 has the front direction D1a and the rear direction D1b. The front direction D1a is an example of the "one direction of the front-rear direction" of the present invention, and the rear direction D1b is an example of the "other direction of the front-rear direction" of the present invention.

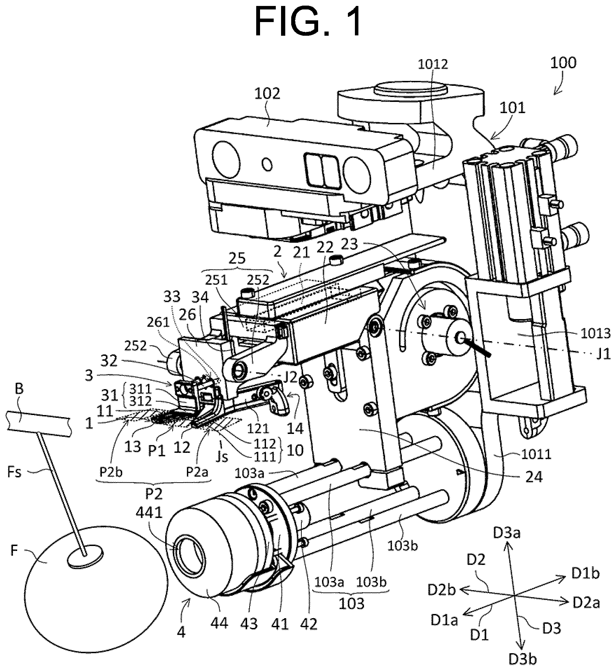

In addition, the direction perpendicular to the front-rear direction D1, for example, the direction from the left or right side of the paper of FIG. 1 to the other, is referred to as the "left-right direction D2." The one direction of the left-right direction D2, for example, the direction from the left side to the right side of the paper of FIG. 1, is referred to as the "leftward direction D2a." The other direction of the left-right direction D2, for example, the direction from the right side to the left side on the paper of FIG. 1, is referred to as the "rightward direction D2b." In addition, the left-right direction D2 is an example of the "width direction" of the present invention, the leftward direction D2a is an example of the "one direction of the width direction" of the present invention, and the rightward direction D2b is an example of the "other direction of the width direction" of the present invention.

The direction perpendicular to both the front-rear direction D1 and the left-right direction D2 and extending from one of the cutting unit 1 and a holding unit 4 to the other is referred to as the "up-down direction D3." In the up-down directions D3, the direction from the holding unit 4 to the cutting unit 1 is referred to as the "upward direction D3a," and the direction from the cutting unit 1 to the holding unit 4 is referred to as the "downward direction D3b." The upward direction D3a is an example of the "one direction of the up-down direction" of the present invention, and the downward direction D3b is an example of the "other direction of the up-down direction" of the present invention.

### <1. First Embodiment>

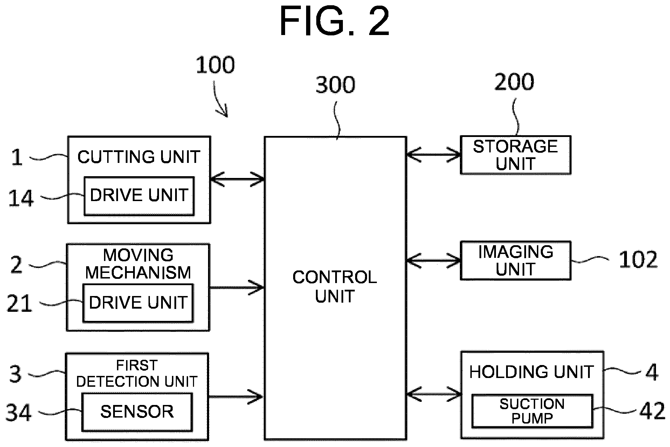

A harvesting device 100 is mounted on an arm of a robot device that, for example, picks a fruit F from a fruit tree, cuts a peduncle Fs supporting the fruit F, and separates and harvests the fruit F from a branch B of the fruit tree. FIG. 1 is an external view illustrating a configuration example of the harvesting device 100 according to the first embodiment. FIG. 2 is a block diagram illustrating a configuration example of a control system of the harvesting device 100 according to the first embodiment.

As illustrated in FIG. 1, the harvesting device 100 includes an attachment 101, an imaging unit 102, and columns 103.

The attachment 101 is connected to a tip of the arm of the robot device and can rotate around a predetermined axis parallel to the front-rear direction D1 with respect to the arm. The attachment 101 has a plate part 1011, a holder 1012, and a bracket 1013. The plate part 1011 is rotatably connected to the arm and extends in the up-down direction D3. The holder 1012 extends from an upper end of the plate part 1011 in the front direction D1a and supports the imaging unit 102. The bracket 1013 is disposed on a side surface of a center of the plate part 1011 in the up-down direction D3.

The imaging unit 102 is disposed at a front end of the holder 1012 and captures an image of the harvesting device 100 in the front direction D1a. Imaging data from the imaging unit 102 is transmitted to a control unit 300, which will be described later. For example, the control unit 300 recognizes a position and a posture of the fruit F, a position of a calyx of the fruit F, and the like, on the basis of the imaging data of the imaging unit 102.

The columns 103 extend from a lower part of the plate part 1011 in the front direction D1a. At front ends of the columns 103, the holding unit 4, which will be described later, is disposed. In this embodiment, the columns 103 include two columns 103a aligned in the left-right direction D2, and two columns 103b arranged in the downward direction D3b with respect to the columns 103a and aligned in the left-right direction D2. However, the columns 103 are not limited to this example, and the number of the columns 103 may be singular or may be a plural number other than four.

As illustrated in FIG. 1, the harvesting device 100 further includes a cutting unit 1, a moving mechanism 2, a first detection unit 3, the holding unit 4, and a drive unit 14.

The cutting unit 1 is a component for cutting the peduncle Fs. The moving mechanism 2 moves the cutting unit 1 and at least a portion of the first detection unit 3 (e.g., an antenna unit 31 described later) in the front-rear direction D1. The front-rear direction D1 is such a direction as to approach and separate from the peduncle Fs. The first detection unit 3 is a component for detecting that the peduncle Fs is within a cuttable range P1. The cuttable range P1 is a positional range in the front-rear direction D1 where the peduncle Fs can be cut by the cutting unit 1. In a case where the first detection unit 3 detects that the peduncle Fs is within the cuttable range P1, the drive unit 14 moves the cutting unit 1 (particularly blade units 10 described later) toward the cuttable range P1. In this embodiment, the drive unit 14 is a component of the cutting unit 1, but is not limited to this example and may be a component separate from the cutting unit 1.

When the harvesting device 100 detects that the peduncle Fs is within the cuttable range P1 where the cutting unit 1 can cut in the front-rear direction D1, the harvesting device 100 moves the cutting unit 1 toward the cuttable range P1. That is, the cutting unit 1 moves toward the peduncle Fs. Consequently, the harvesting device 100 can reliably cut the peduncle Fs and separate the fruit F supported by the peduncle Fs from the branch B of the fruit tree. Therefore, the harvesting device 100 can harvest the fruit F in a clean state without removing the calyx.

The holding unit 4 holds the fruit F supported by the peduncle Fs. In the harvesting device 100, the cutting unit 1 can approach the peduncle Fs in a state in which the harvesting device 100 holds the fruit F by the holding unit 4. Therefore, the harvesting device 100 can suppress the movement of the peduncle Fs, and can easily locate the peduncle Fs within the cuttable range P1. Furthermore, it is also possible to easily cut the peduncle Fs.

The holding unit 4 has a pump holder 41, a pad holder 43, a suction pad 44, and a suction pump 42. The pump holder 41 is fixed to the front ends of the columns 103 and supports the suction pump 42. The pad holder 43 has a disk shape with an opening in the center that connects to an intake port of the suction pump 42, and is connected to the intake port of the suction pump 42. The suction pad 44 is a covered cylindrical member extending in the front-rear direction D1 and is fixed to a front surface of the pad holder 43. A suction hole 441 is disposed on a front surface (i.e., a lid portion) of the suction pad 44. The suction hole 441 is an opening for sucking the fruit F by the suction of the suction pump 42 and holding the fruit with the suction pad 44. A suction port of the suction pump 42 is connected to the outside of the suction pad 44 through the opening of the pad holder 43, the inside of the suction pad 44, and the suction hole 441.

When the holding unit 4 holds the fruit F, the suction pump 42 sucks air from an internal space surrounded by the pad holder 43 and the suction pad 44, and reduces the pressure in the internal space. Consequently, the fruit F is sucked into the suction hole 441 to be held.

The present invention is not limited to the above example, and the holding unit 4 may hold the fruit F by means other than suction. For example, the holding unit 4 may hold the fruit F with a plurality of holding members.

As illustrated in FIG. 2, the harvesting device 100 further includes a storage unit 200 and a control unit 300. The storage unit 200 is a non-transient storage medium that retains memory even when power supply is stopped, and stores, for example, information and programs used by the control unit 300. The control unit 300 uses the information and the programs stored in the storage unit 200 to control components of the harvesting device 100 that require control.

For example, the control unit 300 controls the imaging unit 102, the drive unit 14, a drive unit 23 of the moving mechanism 2, the suction pump 42 of the holding unit 4, the storage unit 200, and the like. The control unit 300 receives an output signal of the first detection unit 3 and an output signal of a second detection unit 5. The control unit 300 receives imaging data from the imaging unit 102, and determines and moves the position of the harvesting device 100 on the basis of the imaging data.

The illustration of this embodiment does not exclude a configuration in which the harvesting device 100 does not include at least one of the storage unit 200 and the control unit 300. That is, at least one of the storage unit 200 and the control unit 300 may be an external device connected to the harvesting device 100, and may be mounted on, for example, the robot device provided with the harvesting device 100.

### <1-1. Cutting Unit 1>

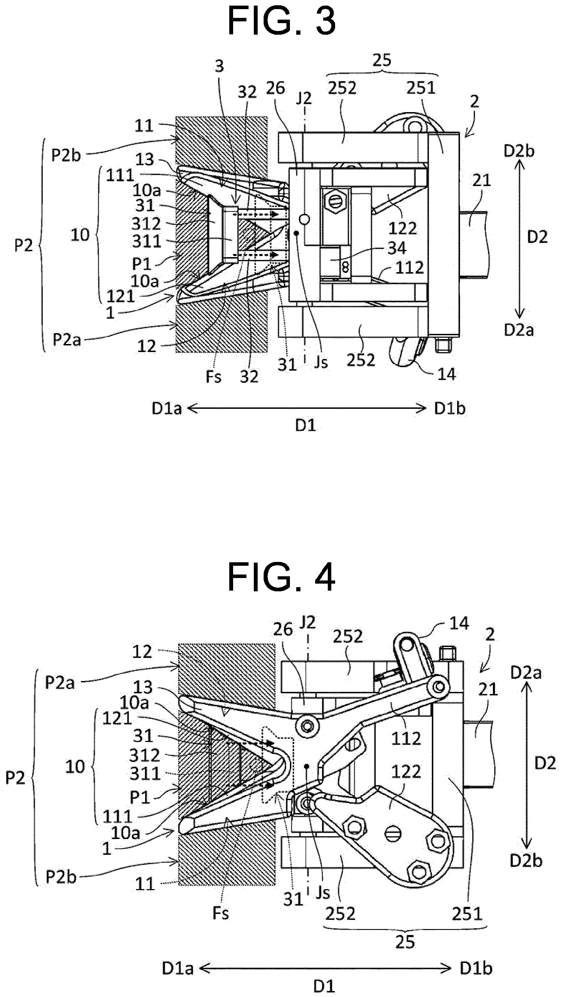

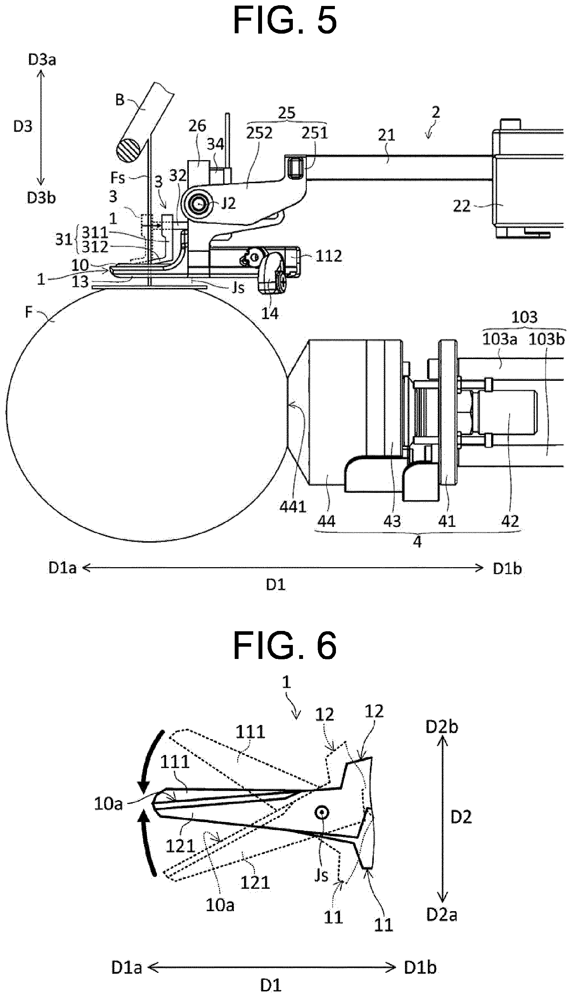

Now, a configuration example of the cutting unit 1 will be described with reference to FIG. 3 to FIG. 6. FIG. 3 is an enlarged top view of a vicinity of the cutting unit 1 in the first embodiment. FIG. 4 is an enlarged bottom view of the vicinity of the cutting unit in the first embodiment. FIG. 5 is a side view of the vicinities of the cutting unit 1 and the holding unit 4 in the first embodiment as viewed from the leftward direction D2a FIG. 6 is a schematic diagram illustrating a configuration of a modification of scissors of the cutting unit 1.

In this embodiment, the cutting unit 1 has a right cutting member 11, a left cutting member 12, and a blade cover member 13. The right cutting member 11 has a right blade unit 111 and a right handle 112. The left cutting member 12 has a left blade unit 121 facing the right blade unit 111, and a left handle 122 facing the right handle 112. In the following, the right blade unit 111 and the left blade unit 121 may be collectively referred to as "(a pair of) blade units 10." In addition, the right handle 112 and the left handle 122 may be collectively referred to as "(a pair of) handles 112 and 122." The pair of handles 112 and 122 extend from the respective blade units 10 in the rear direction D1b (direction away from the peduncle Fs) and face each other.

Although the right handle 112 is located on the leftward direction D2a side with respect to the left handle 122, the right handle 112 is a component of the right cutting member 11, and therefore is referred to as the right handle 112 herein for convenience. Similarly, although the left handle 122 is located on the rightward direction D2b side with respect to the right handle 112, but the left handle 122 is a component of the left cutting member 12, and therefore is referred to as the left handle 122 herein for convenience.

The right cutting member 11 and the left cutting member 12 constitute scissors for cutting the peduncle Fs. For example, in the right cutting member 11, a front end of the right handle 112 is connected to a rear end of the right blade unit 111 and supports the right blade unit 111. In the left cutting member 12, a front end of the left handle 122 is connected to a rear end of the left blade unit 121 and supports the left blade unit 121. The right blade unit 111 and the left blade unit 121 constitute the blade units 10 of the cutting unit 1. That is, the cutting unit 1 has the blade units 10. The blade units 10 is the scissors. The right blade unit 111 (particularly its blade line) and the left blade unit 121 (particularly its blade line) extend at least in the front-rear direction D1 and face each other in the left-right direction D2.

In addition, the front end of the right handle 112 and the front end of the left handle 122 are overlapped in the up-down direction D3 and are rotatably connected to each other. That is, one of the two handles can rotate around a support shaft Js with respect to the other. In addition, the support shaft Js passes through a connecting part between the front end of the right handle 112 and the front end of the left handle 122 and extends parallel to the up-down direction D3. Consequently, the right blade unit 111 (particularly its blade line) and the left blade unit 121 (particularly its blade line) can approach each other and be separated from each other by rotation of the right handle 112 and the left handle 122 around the support shaft Js.

A torsion coil spring (not illustrated) is disposed at the connecting part between the front end of the right handle 112 and the front end of the left handle 122. One end of the torsion coil spring is connected to the right handle 112. The other end of the torsion coil spring is connected to the left handle 122. The torsion coil spring separates the right handle 112 and the left handle 122 in the circumferential direction centered on the support shaft Js. Consequently, the right blade unit 111 and the left blade unit 121 separate in the circumferential direction centered on the support shaft Js in a normal state (for example, when the peduncle Fs is not cut).

The blade cover member 13 covers lower surfaces of the blade units 10 and side surfaces other than an area where blade lines are disposed, and in particular covers front ends of the blade units 10. Due to the placement of the blade cover member 13, when the blade units 10 advance toward the peduncle Fs, even when a front end of the cutting unit 1 abuts against a surface of the fruit F, the front end of the cutting unit 1 advances while moving in the upward direction D3a following a surface of the fruit F. Therefore, the peduncle Fs can be located within the cuttable range P1 without penetration of the fruit F or cutting of the surface of the fruit F by the blade units 10.

The drive unit 14 rotates the right handle 112 and the left handle 122 around the support shaft Js in response to the control of the control unit 300. Consequently, the drive unit 14 causes the blade line of the right blade unit 111 and the blade line of the left blade unit 121 to approach each other in the left-right direction D2. For example, when the peduncle Fs is cut, the drive unit 14 causes (the blade lines of) the two to approach each other in the left-right direction D2 to close the blade units. At this time, the blade line of the right blade unit 111 and the blade line of the left blade unit 121 bite into the peduncle Fs while shifting in the up-down direction D3. Consequently, in the peduncle Fs, shear force is generated in an area between the blade lines of the two in the up-down direction D3. This shear force causes the peduncle Fs to be cut.

The peduncle Fs is cut, and thereafter the drive unit 14 causes the right handle 112 and the left handle 122 to rotate freely. At this time, due to elastic force that causes the torsion coil spring that is twisted at the time of cutting of the peduncle Fs to return to an original state, regardless of the drive unit 14, the right blade unit 111 and the left blade unit 121 are separated in the circumferential direction centered on the support shaft Js. Consequently, in the left-right direction D2, the right blade unit 111 and the left blade unit 121 return to respective original positions.

For example, in this embodiment, the blade line of the right blade unit 111 and the blade line of the left blade unit 121 are respective straight line shapes. However, the present invention is not limited to this example, and at least one of the two may be curved, such as an arc or wave shape. For example, both the blade lines are formed in respective arc-shapes protruding toward the inside in the left-right direction D2 (toward the cuttable range P1), so that the cutting unit 1 can cut the peduncle Fs located in the cuttable range P1 with less force without allowing the peduncle Fs to escape in the front direction D1a. Alternatively, both the blade lines are formed in respective arc-shapes protruding toward the outside in the left-right direction D2 (direction opposite to the cuttable range P1), so that by making both blade lines arc-shaped and protruding outward from the left-right direction D2 (the direction opposite to the cuttable range P1), the cutting unit 1 can place the peduncle Fs inside a closed curve formed by both the blade lines as seen from the up-down direction D3. Therefore, the cutting unit 1 can reliably cut peduncle Fs.

The scissors of the cutting unit 1 are composed of a blade body and a facing body of the blade body. The blade line is placed at an end of the blade body on the cuttable range P1 side in the left-right direction D2 of the end being located. An end on the blade body side in the left-right direction D2 of the facing body faces the blade line of the blade body. That is, one of the right blade unit 111 and the left blade unit 121 is the blade body and the other is the facing body. In addition, the pair of handles 112 and 122 extend from the blade body and the facing body, respectively, in the rear direction D1b away from the peduncle Fs, and face each other in the left-right direction D2.

In this embodiment, the facing body is also the blade body. That is, a blade line 10a is placed at an end on the blade body side in the left-right direction D2 of the facing body. In other words, the right blade unit 111 and the left blade unit 121 are each the blade body.

However, the present invention is not limited to this example, as illustrated in FIG. 6, the facing body may not be the blade body. That is, the blade line 10a does not need to be placed at the end on the blade body side in the left-right direction D2 of the facing body.

In other words, one of the right blade unit 111 and the left blade unit 121 may be the blade body in which the blade line 10a is placed and may have a sharp cutting edge. The other is the facing body where the blade line 10a is not placed, that is, does not have to have a sharp edge. In FIG. 6, the left blade unit 121 is the blade body with the blade line 10a placed at an end in the rightward direction D2b. On the other hand, the right blade unit 111 is the facing body with no blade line 10a placed at an end in the leftward direction D2a. Thus, even when the blade line 10a is placed on only one of the right blade unit 111 and the left blade unit 121, the cutting unit 1 can cut the peduncle Fs.

Furthermore, the present invention is not limited to the above examples, the right cutting member 11 and the left cutting member 12 do not have to constitute scissors. For example, the blade line of the right blade unit 111 and the blade line of the left blade unit 121 may both extend in the front-rear direction D1 and be aligned parallel to each other. Furthermore, the right cutting member 11 and the left cutting member 12 may move in the left-right direction D2, respectively, so that (the blade line of) the right blade unit 111 and (the blade line of) the left blade unit 121 approach and separate.

Furthermore, the present invention is not limited to the above examples, the blade unit 10 of the cutting unit 1 may be configured to have one of the right blade unit 111 and the left blade unit 121 but not have the other. That is, the blade unit 10 may be single-edged. Thus, the cutting unit 1 can still cut the peduncle Fs. For example, the sharp blade line of one blade unit 10 bites into the peduncle Fs, and a break occurs in the peduncle Fs. The drive unit 14 moves the single-edged blade unit 10 toward the peduncle Fs. Consequently, as the one blade unit 10 moves toward the peduncle Fs in the left-right direction D2, the opening of the break in the up-down direction D3 widens. Then, the peduncle Fs is separated in the up-down direction D3.

### <1-2. Moving Mechanism>

Now, a configuration example of the of moving mechanism 2 will be described with reference to FIG. 1. The moving mechanism 2 is disposed in the upward direction D3a with reference to the columns 103 and the holding unit 4, and is connected to the plate part 1011 of the attachment 101 by the bracket 1013.

The moving mechanism 2 has a rod 21, a guide member 22, a drive unit 23, the bracket 24, an arm hinge 25, and a hinge 26.

The rod 21 has a rod shape extending in the front-rear direction D1, and can advance and retreat in the front-rear direction D1. The guide member 22 houses at least a rear end of the rod 21 and guides the movement of the rod 21 in the front-rear direction D1. The drive unit 23 moves the rod 21 in the front-rear direction D1 in accordance with control of the control unit 300.

The bracket 24 extends in the up-down direction D3 and connects the guide member 22 and the columns 103a. A lower end of the bracket 24 is connected to columns 103a. An upper end of the bracket 24 is connected to the guide member 22 so as to be rotatable about an axis J1. The axis J1 passes through a connecting portion between the guide member 22 and the bracket 24 and extends in the left-right direction D2. Consequently, the moving mechanism 2 other than the drive unit 23, and the cutting unit 1 and the first detection unit 3 disposed at a front end of the moving mechanism 2, can swing in the up-down direction D3 centered on the axis J1.

The arm hinge 25 is connected to the rod 21 and can move together with the rod 21 in the front-rear direction D1. The arm hinge 25 has a bar 251 and a pair of left and right arms 252. The bar 251 is fixed to a front end of the rod 21 and extends in the left-right direction D2. The pair of left and right arms 252 extend from ends in the left-right direction D2 of the bar 251 in the front direction D1a.

The hinge 26 holds the cutting unit 1 and the first detection unit 3. For example, a lower end of the hinge 26 holds the right cutting member 11 and the left cutting member 12. The hinge 26 is disposed between front ends of the pair of left and right arms 252 and is connected to the front ends of the arms 252 so as to be rotatable about an axis J2. The axis J2 extends in the left-right direction D2 through a connecting portion between the front end of each arm 252 and the hinge 26. Consequently, the cutting unit 1 and the first detection unit 3 can swing in the up-down direction D3 centered on the axis J2. Thus, even when the cutting unit 1 abuts against the fruit F at the time of movement in the front direction D1a, the hinge 26 rotates together with the cutting unit 1, so that a tip of the cutting unit 1 can be moved in the up-down direction D3 along a surface of the fruit F. The hinge 26 has guide hole 261 disposed therein. The guide hole 261 pass through the hinge 26 in the front-rear direction D1.

### <1-3. First Detection Unit 3>

Now, a configuration example of the first detection unit 3 will be described with reference to FIG. 1 and FIGS. 3 to 5. The first detection unit 3 has the antenna unit 31, rods 32, urging members 33, and a sensor 34.

The antenna unit 31 can advance and retreat in the front-rear direction D1 and is a component for contacting the peduncle Fs. When there is no contact with an object such as the peduncle Fs, the antenna unit 31 remains stationary at a fixed relative position with respect to the blade units 10 in the front-rear direction D1. On the other hand, when the antenna unit 31 is located in the rear direction D1b from the relative position with respect to the blade units 10 in the front-rear direction D1, the antenna unit 31 is capable of moving relative to the blade units 10 in the front-rear direction D1. For example, when the antenna unit 31 comes into contact with or is pressed by an object such as the peduncle Fs, the antenna unit 31 can relatively advance and retreat in the front-rear direction D1 with respect to the blade units 10 in the rear direction D1b.

The rods 32 are disposed in the rear direction D1b of the antenna unit 31 and supports the antenna unit 31.

The rods 32 extend in the front-rear direction D1 and are inserted into the guide holes 261 of the hinge 26. Consequently, the rods 32 are supported by the hinge 26 so as to be movable in the front-rear direction D1.

The urging members 33 are disposed in the rear direction D1b of the rods 32 and, urge the antenna unit 31 in the front direction D1a together with the rods 32. The urging members 33 are spring coils in this embodiment, but are not limited to this example and may be any members that apply predetermined force to the antenna unit 31 in the front direction D1a. The magnitude of the force should be such a degree that the forward movement of the antenna unit 31 can be stopped by contact with an object such as the peduncle Fs. Furthermore, the magnitude of the force may be such a degree that the antenna unit 31, which is in the rear direction D1b from the above fixed position with respect to the blade units 10, can move relatively in the front direction D1a when there is no contact with an object such as the peduncle Fs.

The sensor 34 detects a relative retreat amount of the antenna unit 31 in the rear direction D1b with respect to the cutting unit 1 (particularly the blade units 10). The sensor 34 is an optical element in this embodiment, but is not limited to this example and other types of elements may be employed.

In the harvesting device 100, the control unit 300 determines whether or not the peduncle Fs is within the cuttable range P1 in the front-rear direction D1 on the basis of a detection result of the sensor 34. The control unit 300 determines whether or not to move the blade units 10 on the basis of the determination result.

For example, when the antenna unit 31 is not in contact with the peduncle Fs at the time of movement of the blade units 10 and the antenna unit 31 in such a front direction D1a as to approach the peduncle Fs, the antenna unit 31 moves in the front direction D1a together with the blade units 10 without any relative movement. That is, the relative retreat amount of the antenna unit 31 detected by sensor 34 is 0. In this case, it is determined that there is no peduncle Fs within the cuttable range P1 in the front-rear direction D1, and the blade units 10 and the antenna unit 31 move directly in the front direction D1a.

On the other hand, when the antenna unit 31 comes into contact with the peduncle Fs, the blade units 10 move while the antenna unit 31 stops advancing. That is, the antenna unit 31 relatively moves in the rear direction D1b with respect to the blade units 10. In this case, the relative retreat amount of the antenna unit 31 detected by the sensor 34 increases in accordance with the movement of the blade units 10. In this case, it is determined that the peduncle Fs is within the cuttable range P1 in the front-rear direction D1, and the blade units 10 move toward the cuttable range P1. Therefore, the peduncle Fs is cut by the blade units 10. Consequently, the harvesting device 100 can separate the fruit F from the branch B of the fruit tree without causing any load to the fruit F and a calyx of the fruit F.

After the peduncle Fs is cut off, the antenna unit 31 is not stopped by the peduncle Fs and can move relatively in the front direction D1a. In addition, the moving mechanism 2 moves the blade units 10 and the antenna unit 31 in the rear direction D1b under the control of the control unit 300. Therefore, the antenna unit 31 is urged by the urging members 33 to relatively move in the front direction D1a, and returns to an original relative position with respect to the blade units 10.

In addition, when the antenna unit 31 is not in contact with an object such as the peduncle Fs, the antenna unit 31 is located on a base end side with respect to the tip of the cutting unit 1. In detail, at this time, the antenna unit 31 is located in the rear direction D1b with respect to front ends of the blade units 10 and in the front direction D1a with respect to rear ends of the blade units 10. Thus, the harvesting device 100 can accurately detect whether or not the peduncle Fs is within the cuttable range P1.

For example, when the antenna unit 31 does not retreat relatively, it is determined that the peduncle Fs is in the front direction D1a with respect to the cuttable range P1, and the blade units 10 further advance. On the other hand, when the antenna unit 31 retreat relatively, the control unit 300 determines that the peduncle Fs is within the cuttable range P1 and moves the blade units 10 toward the cuttable range P1. Consequently, the peduncle Fs is cut off.

Preferably, the cutting of the peduncle Fs by the cutting unit 1 is performed on the basis of the relative retreat amount of the antenna unit 31. That is, when the amount of relative movement of the antenna unit 31 in the rear direction D1b with respect to the blade units 10 of the cutting unit 1 is equal to or greater than a threshold value, the drive unit 14 moves the blade units 10 of the cutting unit 1 toward the cuttable range P1, under the control of the control unit 300.

Thus, for example, even in a case where the antenna unit 31 comes into contact with the peduncle Fs and retreats relatively, when the retreat amount is less than the threshold value, the blade units 10 continue to move in the front direction D1a without performing cutting action. Consequently, the peduncle Fs can be moved relatively with respect to the blade units 10 in the rear direction D1b from the front ends of the blade units 10. When the relative retreat amount of the antenna unit 31 is equal to or greater than the threshold value, it can be determined that the peduncle Fs is at such a position in the front-rear direction D1 within the cuttable range P1 that the peduncle Fs can be cut more reliably. Therefore, the harvesting device 100 can more reliably cut the peduncle Fs with the blade units 10 and separate the fruit F from the branch B of the fruit tree.

However, the above example does not exclude a configuration in which the cutting of the peduncle Fs by the blade units 10 is not based on the relative retreat amount of the antenna unit 31. For example, when the control unit 300 detects the relative retreat of the antenna unit 31, the control unit 300 may cut off the peduncle Fs with the blade units 10 (even when the retreat amount is less than the threshold value).

Now, the antenna unit 31 has a support member 311 and a contact part 312. The support member 311 extends in the up-down direction D3 and supports the contact part 312. The contact part 312 is disposed in the front direction D1a from the support member 311, and protrudes, for example, from a front surface of the support member 311 in the front direction D1a. In addition, the contact part 312 extends in the left-right direction D2 and can come into contact with the peduncle Fs. In this embodiment, the position of the peduncle Fs is detected by the contact between the contact part 312 and the peduncle Fs. That is, when the blade units 10 and the antenna unit 31 advance, the contact part 312 comes into contact with an object such as the peduncle Fs. Consequently, the antenna unit 31 stops and relatively retreats with respect to the blade units 10.

In this embodiment, the contact part 312 is integral with the support member 311, but is not limited to this example and may be separate from the support member 311.

Preferably, in the left-right direction D2, the length of the contact part 312 is greater than the length of the support member 311. For example, in this embodiment, when viewed from the up-down direction D3, the contact part 312 expands in the left-right direction D2 as the contact part 312 goes toward the front direction D1a. That is, in the left-right direction D2, the length of a front end of the contact part 312 is wider than the length of a rear end (that is, a base end). Thus, the antenna unit 31 can be made slim by narrowing the length in the left-right direction D2 of the support member 311 while the length in the left-right direction D2 of the contact part 312 can be made sufficiently wide. Therefore, the first detection unit 3 can make the antenna unit 31 compact. However, this example does not exclude a configuration in which the length of the contact part 312 is equal to or less than the length of the support member 311 in the left-right direction D2.

The antenna unit 31 (particularly the contact part 312) is disposed on one side in the up-down direction D3 with respect to the cutting unit 1 (particularly the blade units 10). For example, the antenna unit 31 (particularly the contact part 312) is disposed in the upward direction D3a with respect to the cutting unit 1 in this embodiment, but is not limited to this example, and may be disposed in the downward direction D3b with respect to the cutting unit 1. Thus, the harvesting device 100 can prevent contact between the cutting unit 1 (particularly the blade units 10) and the antenna unit 31. That is, in the harvesting device 100, the antenna unit 31 can be disposed at such a position as not to affect the cutting action of the peduncle Fs by the cutting unit 1.

Preferably, the antenna unit 31 (particularly the contact part 312) faces the cutting unit 1 (particularly the blade units 10) with a gap in the up-down direction D3. Thus, in the harvesting device 100, it is possible to more reliably prevent contact between the cutting unit 1 (particularly blade units 10) and the antenna unit 31. However, this example does not exclude a configuration in which the antenna unit 31 (particularly contact part 312) does not face the cutting unit 1 with the gap therebetween in the up-down direction D3. For example, in the up-down direction D3, the antenna unit 31 (particularly the contact part 312) may come into contact with the cutting unit 1 (particularly the blade units 10) to the extent that the cutting action of the cutting unit 1 is not affected.

In addition, the length (that is, thickness) in the up-down direction D3 of the contact part 312 is shorter than the length of the support member 311 in the up-down direction D3 and is shorter than the length in the left-right direction D2 of the contact part 312. For example, the contact part 312 is thinned to about 1 mm. Thus, the antenna unit 31 can come into contact with the peduncle Fs in a narrow area in the up-down direction D3. Even when the peduncle Fs comes into contact with ends on a side opposite to the blade units 10 in the up-down direction D3 (the upper end in this embodiment) in the contact part 312, the peduncle Fs that comes into contact with the contact part 312 in the front-rear direction D1 is likely to be within the cuttable range P1. Therefore, the harvesting device 100 can improve a success rate of the cutting the peduncle Fs.

Preferably, in the up-down direction D3, the contact part 312 is disposed on the blade units 10 side of a front surface of the antenna unit 31. More preferably, the contact part 312 is disposed at an end (a lower end in this embodiment) on the blade units 10 side in the up-down direction D3 on the front surface of the antenna unit 31. Thus, the contact part 312 can come into contact with the peduncle Fs at a position closer to the blade units 10 in the up-down direction D3. Therefore, a possibility that the peduncle Fs in contact with the contact part 312 in the front-rear direction D1 is within the cuttable range P1 is further increased. Accordingly, the harvesting device 100 can further improve the success rate of cutting the peduncle Fs. However, this example does not exclude a configuration in which the contact part 312 is disposed at a position away from the blade units 10 in the up-down direction D3. For example, the contact part 312 may be disposed in a central part in the up-down direction D3 of the front surface of the antenna unit 31, or may be disposed at an end opposite to the blade units 10 of the front surface of the antenna unit 31 (e.g., the upper end in this embodiment).

Moreover, at least a portion of the antenna unit 31 (particularly the contact part 312) is disposed in such a position as to overlap with the scissors (e.g., the blade units 10 of the cutting unit 1) in top view, and is disposed, for example, between the right blade unit 111 and the left blade unit 121 when viewed from the up-down direction D3. Thus, when the peduncle Fs is between the right blade unit 111 and the left blade unit 121 in the left-right direction D2, the antenna unit 31 retreats relatively due to the contact with the peduncle Fs. Therefore, the control unit 300 can accurately detect that the peduncle Fs is in the cuttable range P1 between the right blade unit 111 and the left blade unit 121 by detecting the relative retreat amount of the antenna unit 31.

Preferably, a right end of the antenna unit 31 (particularly the contact part 312) is disposed in a leftward direction D2a with respect to the right cutting member 11. In addition, preferably, a left end of the antenna unit 31 (particularly the contact part 312) is disposed in the rightward direction D2b with respect to the left cutting member 12. That is, the right end (of contact part 312) of the antenna unit 31 does not protrude outside the right cutting member 11 in the left-right direction D2 (i.e., an uncuttable range P2b in the rightward direction D2b). In addition, the left end (of the contact part 312) of the antenna unit 31 does not protrude outside the left cutting member 12 in the left-right direction D2 (i.e., an uncuttable range P2a in the leftward direction D2a).

The uncuttable ranges P2a and P2b are positional ranges in which cutting by the blade units 10 is not possible, and are each located on a side opposite to the cuttable range P1 in the left-right direction D2 of the cutting unit 1. For example, the uncuttable range P2a in the leftward direction D2a is located in the leftward direction D2a of the left blade unit 121 (more specifically, a portion that covers a left side surface of the left blade unit 121 in the blade cover member 13). In other words, the uncuttable range P2a is located on the opposite side to the cuttable range P1 in the left-right direction D2 with the left blade unit 121 (more specifically, the portion that covers the left side surface of the left blade unit 121 in the blade cover member 13) therebetween. In addition, the uncuttable range P2b on the rightward direction D2b side is located in the rightward direction D2b of the right blade unit 111 (more specifically, a portion that covers a right side surface of the right blade unit 111 in the blade cover member 13). In other words, the uncuttable range P2b is located on the opposite side to the cuttable range P1 of the left-right direction D2 with the right blade unit 111 (more specifically, the portion that covers the right side surface of the right blade unit 111 in the blade cover member 13) therebetween. In the following, the uncuttable range P2a on the leftward direction D2a side and the uncuttable range P2b on the rightward direction D2b side may be collectively referred to as an "uncuttable range P2."

For example, even when the blade units 10 approach the peduncle Fs, when the peduncle Fs is in the above uncuttable range P2a or P2b, the antenna unit 31 does not come into contact with the peduncle Fs and does not retreat relatively. Therefore, even when the blade units 10 and the antenna unit 31 advance sufficiently, when the relative retreat of the antenna unit 31 is not detected, the control unit 300 can determine that the peduncle Fs is not between the right blade unit 111 and the left blade unit 121. Therefore, under the control of the control unit 300, the harvesting device 100 returns the blade units 10 and the first detection unit 3 in the rear direction D1b, and then changes the positions of the blade units 10 in the left-right direction D2, and cutting of the peduncle Fs can be implemented again.

However, the above example does not exclude a configuration in which the right end of the antenna unit 31 (particularly the contact part 312) is not disposed in the leftward direction D2a with respect to the right cutting member 11, and do not exclude a configuration in which the left end of the antenna unit 31 (particularly the contact part 312) is not disposed in the rightward direction D2b with respect to the left cutting member 12. For example, the right end may be disposed in the rightward direction D2b with respect to the right cutting member 11. The left end may be disposed in the leftward direction D2a with respect to the left cutting member 12.

Furthermore, the illustration of this embodiment does not exclude a configuration in which the antenna unit 31 does not have the contact part 312. That is, the contact part 312 may be omitted. In this case, the position of the peduncle Fs is detected by contact between the support member 311 and the peduncle Fs. That is, when the blade units 10 and the antenna unit 31 advance, the support member 311 comes into contact with an object such as the peduncle Fs, so that the antenna unit 31 stops and retreats with respect to the blade units 10.

### <1-4. Action Example of Harvesting Device 100>

Now, an action example of the harvesting device 100 will be described.

First, the control unit 300 determines the fruit F to be harvested from the imaging data of the imaging unit 102, and moves the robot device mounted with the harvesting device 100 to the front of the fruit F.

Next, the control unit 300 calculates a rough three-dimensional position of the fruit F and the peduncle Fs that supports the fruit F on the basis of the imaging data showing the fruit F to be harvested and the peduncle Fs that supports the fruit F. Thereafter, the control unit 300 moves the harvesting device 100 on the basis of a calculation result. Consequently, the control unit 300 causes the peduncle Fs to be located in the front direction D1a and in the vicinity of the cutting unit 1, and causes the fruit F to be located in the front direction D1a and in the vicinity of the holding unit 4 (particularly the suction hole 441). Then, the control unit 300 drives the suction pump 42, and the fruit F is adsorbed and held by the holding unit 4. The vicinity mentioned herein means that the blade units 10 and the antenna unit 31 that move in the front direction D1a are close enough to reach the peduncle Fs and that the holding unit 4 is close enough to hold the fruit F.

Next, the control unit 300 moves the blade units 10 of the cutting unit 1 and the antenna unit 31 of the first detection unit 3 in the front direction D1a by the moving mechanism 2. As described above, the cutting unit 1 and the first detection unit 3 can swing in the up-down direction D3 centered on the axis 11, and can also swing in the up-down direction D3 centered on the axis J2. Therefore, even when the front end of the advancing cutting unit 1 abuts against the fruit F, the front end can still advance following the surface of the fruit F. The control unit 300 detects the presence or absence of the relative retreat of the antenna unit 31 and the retreat amount on the basis of a detection result of the sensor 34, so that it is possible to determine whether or not the peduncle Fs is within the cuttable range P1.

Herein, in a case where the control unit 300 does not determine that the peduncle Fs is within the cuttable range P1 even when the advancement amount of the blade units 10 and the antenna unit 31 reaches or exceeds a preset distance, the control unit 300 retreats the blade units 10 and the antenna unit 31. Furthermore, the control unit 300 again images the peduncle Fs using the imaging unit 102, and calculates the rough three-dimensional position of the peduncle Fs on the basis of the imaging data again. Thereafter, the control unit 300 moves the harvesting device 100 on the basis of the calculation result so that the peduncle Fs is more accurately located in the front direction D1a and in the vicinity of the cutting unit 1. Then, the control unit 300 moves the blade units 10 and the antenna unit 31 to the front direction D1a again, and determines again whether or not the peduncle Fs is within the cuttable range P1. The above action is repeated until it is determined that the peduncle Fs is within the cuttable range P1. Alternatively, when the number of repetitions reaches a preset number, the control unit 300 may change the object to be harvested to another fruit F, or may notify an error by an alarm sound or display and stop a harvesting process. During the above action, the fruit F may remain held in the holding unit 4, or may be temporarily removed from the holding unit.

On the other hand, when the control unit 300 determines that the peduncle Fs is within the cuttable range P1, the peduncle Fs is cut by the blade units 10. The robot device, for example, moves the harvesting device 100 directly above a harvesting basket and houses the fruit F separated from branch B of the fruit tree in the harvesting basket. Then, the robot device changes the object to be harvested to another fruit F and continues the harvesting work.

The above harvesting process ends, for example, when all fruits F are harvested or when the control unit 300 receives a harvest end command.

### <2. Second Embodiment>

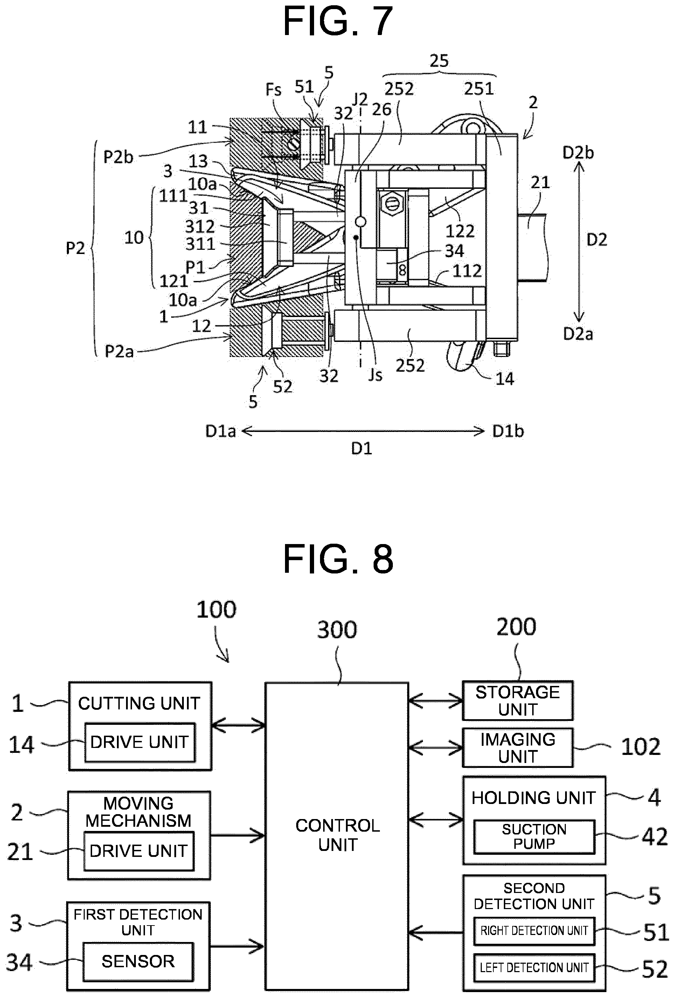

Now, a second embodiment will be described with reference to FIG. 7 and FIG. 8. FIG. 7 is an enlarged top view of the vicinity of the cutting unit 1 in the second embodiment. FIG. 8 is a block diagram illustrating a configuration example of a control system of the harvesting device 100 according to the second embodiment. In the second embodiment, a configuration that differs from that of the first embodiment will be described. In addition, components similar to those in the first embodiment will be given the same reference numerals, and description thereof may be omitted. In addition, the second embodiment can be arbitrarily combined with at least a portion of the configuration of the first embodiment, unless a particular contradiction arises.

In the second embodiment, the harvesting device 100 further includes a second detection unit 5. The second detection unit 5 is a component for detecting that a peduncle Fs is in an uncuttable range P2, and transmits an output signal representing a detection result to the control unit 300. The second detection unit 5 has a right detection unit 51 and a left detection unit 52. The right detection unit 51 is a component for detecting that the peduncle Fs is located in an uncuttable range P2b on the rightward direction D2b side. The left detection unit 52 is a component for detecting that the peduncle Fs is located in an uncuttable range P2a on the leftward direction D2a side. The right detection unit 51 and the left detection unit 52 each output an output signal representing a detection result to the control unit 300.

In the harvesting device 100 according to the second embodiment, when the peduncle Fs is present in the uncuttable range P2, the peduncle Fs can be detected by the second detection unit 5. For example, when there is the peduncle Fs in the uncuttable range P2b on the rightward direction D2b side, the peduncle Fs can be detected by the right detection unit 51.

In addition, when there is the peduncle Fs in the uncuttable range P2a on the leftward direction D2a side, the peduncle Fs can be detected by the left detection unit 52. Therefore, when the peduncle Fs is not within the cuttable range P1, the harvesting device 100 can quickly change the position of the blade units 10 in the left-right direction D2 and cut the peduncle Fs again.

In the second embodiment, the configurations of the right detection unit 51 and the left detection unit 52 are similar to the configuration of the first detection unit 3. However, the present invention is not limited to this example, and the configuration of at least one of the right detection unit 51 and the left detection unit 52 may be different from the configuration of the first detection unit 3 as long as it is possible to detect that the peduncle Fs is in the uncuttable range P2.

In addition, in the harvesting device 100 according to the second embodiment, the second detection unit 5 has both the right detection unit 51 and the left detection unit 52. However, the present invention is not limited to this example, and the second detection unit 5 may be configured to have one of the right detection unit 51 or the left detection unit 52, that is, may not have the other.

### <3. Third Embodiment>

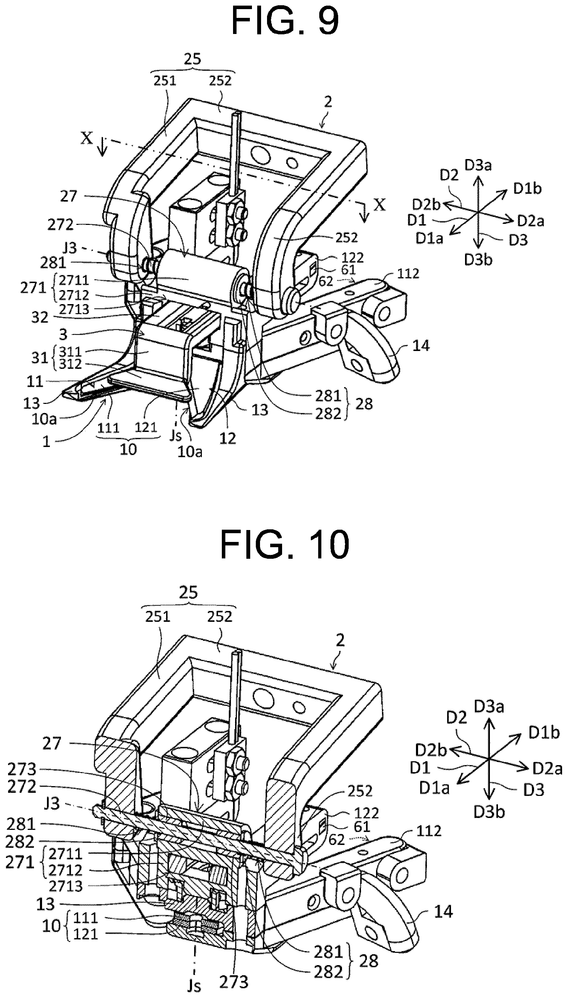

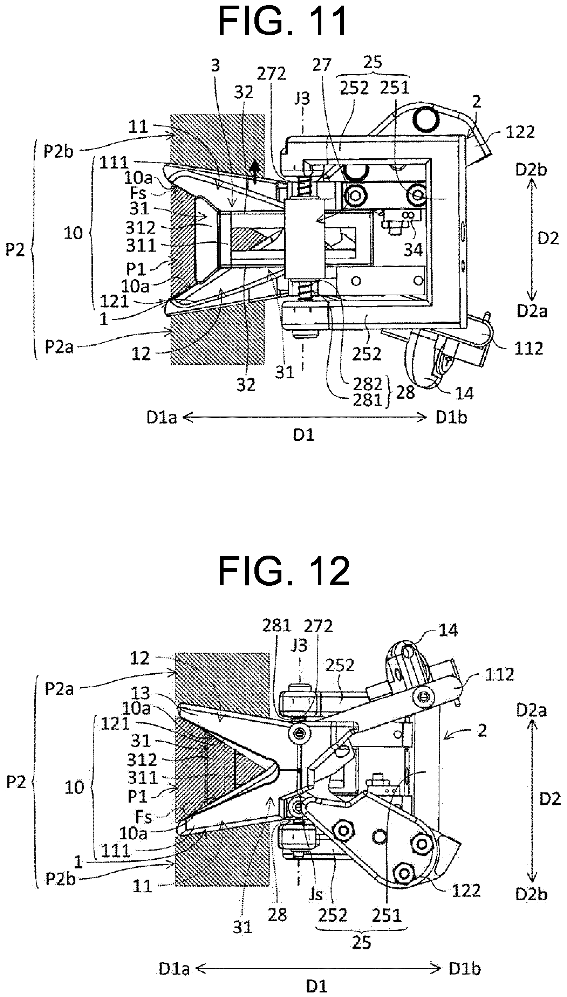

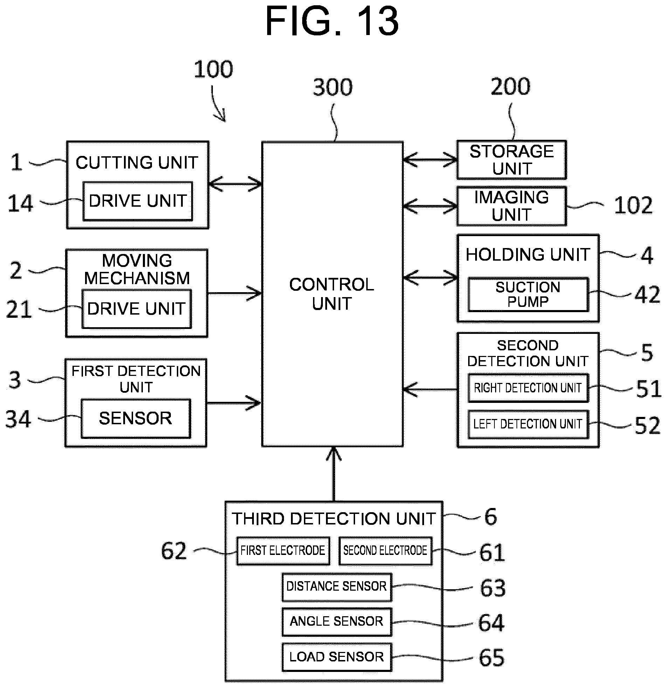

Now, the third embodiment will be described with reference to FIG. 9 to FIG. 13. FIG. 9 is a perspective view illustrating a configuration example of a cutting unit 1 and a tip of a moving mechanism 2 in a third embodiment. FIG. 10 is a sectional view illustrating an example of a connection structure between a hinge 26 and arm 252 in the third embodiment. FIG. 11 is an enlarged top view of a vicinity of the cutting unit 1 in the third embodiment. FIG. 12 is an enlarged bottom view of the vicinity of the cutting unit 1 in the third embodiment. FIG. 13 is a block diagram illustrating a configuration example of a control system of a harvesting device 100 according to the third embodiment. FIG. 10 illustrates a cross-sectional structure of a case where the harvesting device 100 is cut along a virtual cross section including a two-dot chain line X-X and an axis J2 in FIG. 9.

In the third embodiment, a configuration different from the configurations of the first and second embodiments will be described. In addition, components similar to those in the first and second embodiments will be given the same reference numerals, and description thereof may be omitted. In addition, the third embodiment can be arbitrarily combined with at least a portion of the configurations of the first and second embodiments, unless a particular contradiction arises.

In the third embodiment, the cutting unit 1 and a first detection unit 3 are movable in the left-right direction D2 in accordance with external force that acts on at least one of a right blade unit 111 and a left blade unit 121. In addition, the control unit 300 of the harvesting device 100 detects whether or not scissors (i.e., the right blade unit 111 and the left blade unit 121) are closed on the basis of a detection result of a third detection unit 6. Consequently, the control unit 300 detects whether or not a peduncle Fs is cut by the cutting unit 1.

### <3-1. Movement of Cutting Unit 1 in Left-right Direction D2>

As illustrated in FIG. 9 to FIG. 12, in the harvesting device 100 of the third embodiment, the cutting unit 1 is movable in the left-right direction D2 (i.e., the width direction of the cutting unit 1) with respect to the moving mechanism 2.

For example, in a case where the peduncle Fs within a cuttable range P1 is located at an end in the left-right direction D2 of the cuttable range P1, the peduncle Fs may come into contact with and be bitten into the tip side (in the front direction D1a) of a blade unit 10. In this state, when the moving mechanism 2 moves the cutting unit 1 in the front direction D1a, the peduncle Fs may move in the front direction D1a together with the blade unit 10 while being bitten into the tip of the blade unit 10, and may not abut against an antenna unit 31 of the first detection unit 3.

In order to avoid such a state, in the third embodiment, when the peduncle Fs located on the end side in the left-right direction D2 of the cuttable range P1 abuts against the inner side in the left-right direction D2 of the blade unit 10, the cutting unit 1 moves outward in the left-right direction D2 in response to external force that acts on the blade unit 10 from the peduncle Fs. Thus, the harvesting device 100 can prevent the peduncle Fs from being bitten into the blade unit 10 when the cutting unit 1 is moved in the front direction D1a, and can reliably bring the peduncle Fs into contact with the antenna unit 31 of the first detection unit 3.

In this case, preferably, the cutting unit 1 can be moved in the left-right direction D2 (i.e., the width direction of the cutting unit 1) together with the first detection unit 3 (particularly the antenna unit 31). Consequently, the peduncle Fs can be more reliably abutted against the antenna unit 31.

For example, the moving mechanism 2 in the third embodiment includes a rod 21, a guide member 22, a drive unit 23, a bracket 24, and an arm hinge 25, as well as a movable mechanism 27, and preferably further includes a restoration mechanism 28.

### <3-1-1. Movable Mechanism 27>

The movable mechanism 27 connects the cutting unit 1 and the first detection unit to the tips of the arms 252 so as to be movable in the left-right direction D2 and rotatable around the rotating shaft J3. The movable mechanism 27 has a hinge 271, a shaft member 272, and a cylindrical bushing 273.

The hinge 271 is a holding member that holds cutting unit 1 and the first detection unit 3, and is aligned with the arms 252 in the left-right direction D2 (width direction of the cutting unit 1). The arms 252 support the hinge 271 together with the cutting unit 1 and the first detection unit 3 so as to be movable in the left-right direction D2 (the width direction of the cutting unit 1). In other words, the hinge 271 can rotate in the up-down direction D3 together with the cutting unit 1 and the first detection unit 3 with respect to the arms 252. The up-down direction D3 is perpendicular to the front-rear direction D1 and the left-right direction D2 (the width direction of the cutting unit 1).

In addition, the hinge 271 is rotatable together with the cutting unit 1 and the first detection unit 3 around the rotating shaft J3. The rotating shaft J3 passes through a front end of each arm 252 and the inside of a cylinder 2711 of the hinge 271, which will be described later, and extends in the left-right direction D2. That is, the cutting unit 1 and the first detection unit 3 are rotatable around the rotating shaft J3 that is parallel to the left-right direction D2 (the width direction of the cutting unit 1). Thus, even when the cutting unit 1 abuts against a fruit F when moving in the front direction D1a, the hinge 271 rotates together with the cutting unit 1, so that the tip of the cutting unit 1 can be moved in the up-down direction D3 along the surface of the fruit F.

The hinge 271 has the cylinder 2711 and a connecting part 2712. The cylinder 2711 is a cylinder extending in the left-right direction D2 centered on the rotating shaft J3, and is disposed between the respective front ends of a pair of the left and right arms 252 with a gap between each of the arms 252 and the cylinder 2711. The connecting part 2712 protrudes from an outer surface of the cylinder 2711 toward the cutting unit 1 and is connected to the cutting unit 1. Further, guide holes 2713 are disposed in the connecting part 2712. The guide holes 2713 pass through the connecting part 2712 in the thickness direction (e.g., the front-rear direction D1). Rods 32 of the first detection unit 3 are inserted into the guide holes 2713. Consequently, the connecting part 2712 supports the rods 32 movably in the thickness direction (e.g., the front-rear direction D1).

The shaft member 272 extends in left-right direction D2 along the rotating shaft J3 and is supported at the front ends of the pair of left and right arms 252. The shaft member 272 is surrounded by the cylinder 2711 and the bushing 273, that is, is inserted into the cylinder 2711 and the bushing 273.

The bushing 273 is cylindrical and extends in the left-right direction D2 centered on the rotating shaft J3, and is disposed between an inner surface of the cylinder 2711 and an outer surface of the shaft member 272. In this embodiment, the bushing 273 is a bearing that rotatably supports the cylinder 2711 with respect to the shaft member 272.

### <3-1-2. Restoration Mechanism 28>

The restoration mechanism 28 returns the cutting unit 1, which moves from a reference position, to the reference position in the left-right direction D2 (the width direction of the cutting unit 1). In this embodiment, the reference position described above is a central part between the front ends of the pair of left and right arms 252.

For example, as illustrated in FIG. 10, the restoration mechanism 28 has elastic materials 281 and disk-shaped plate parts 282. The elastic materials 281 and the plate parts 282 are disposed between the front ends of the arms 252 and the cylinder 2711 of the hinge 271 on both sides in the left-right direction D2 of the cylinder 2711.

The elastic materials 281 are elastic materials in the left-right direction D2, surrounds the shaft member 272, and extends in the left-right direction D2. The elastic materials 281 return the hinge 271, which moves from the reference position in the left-right direction D2 (the width direction of the cutting unit 1), to the reference position. The elastic materials 281 are spring coils in this embodiment. However, the elastic materials 281 are not limited to this example.

The elastic materials 281 may be something other than spring coils, for example, tubular rubbers.

For example, external force which acts on the cutting unit 1 causes the cylinder 2711 of the movable mechanism 27 to move from the original reference position to one side in the left-right direction D2 together with the cutting unit 1. At this time, the elastic material 281 on one side of the cylinder 2711 in the left-right direction D2 contracts and urges the cylinder 2711 in the other direction of the left-right direction D2 by elastic force. Therefore, when the external force no longer acts on the cutting unit 1, the cylinder 2711 is pushed back in the other direction of the left-right direction D2 together with the cutting unit 1 by the elastic force of the elastic materials 281 described above. That is, the cutting unit 1 held in the cylinder 2711 can return to the original reference position.

The plate parts 282 are disposed between the ends of the cylinder 2711 in the left-right direction D2 and the elastic materials 281, and surround the shaft member 272. The placement of the plate parts 282 prevents the cylinder 2711 (and cutting unit 1 and the like) from rotating together with the elastic materials 281 due to the torque which acts on the elastic materials 281 (force in the circumferential direction centered on the rotating shaft J3).

The configuration of the restoration mechanism 28 is not limited to the above example. Other configurations may be adopted for the restoration mechanism 28 as long as the cutting unit 1, which moves from the reference position in the left-right direction D2, can be returned to the reference position. For example, instead of the elastic force of the elastic materials 281, a configuration using an attractive or repulsive force in the left-right direction D2 between a plurality of magnets may be adopted.

### <3-2. Detection of Cutting of Peduncle Fs>

The harvesting device 100 of the third embodiment further has the third detection unit 6 for detecting cutting of the peduncle Fs by the cutting unit 1. Then, on the basis of a detection result of the third detection unit 6, it is detected whether or not the scissors (a pair of the blade units 10) of the cutting unit 1 are closed or not. Consequently, the harvesting device 100 enables confirmation of the cutting of the peduncle Fs without confirmation using an image from the imaging unit 102 or the like. Therefore, the harvesting device 100 can harvest the fruit F more reliably.

For example, the harvesting device 100 has the pair of blade units 10 that face each other and constitute the scissors, as illustrated in FIG. 9. Furthermore, in a case where the first detection unit 3 detects that the peduncle Fs is within the cuttable range P1, the harvesting device 100 cuts the peduncle Fs by closing the pair of blade units 10. In the third embodiment, this behavior is used to confirm the cutting of the peduncle Fs. That is, the third detection unit 6 detects whether or not the pair of blade units 10 are closed or not, and outputs a detection result to the control unit 300. Then, the control unit 300 detects whether or not the pair of blade units 10 are closed or not on the basis of the detection result of the third detection unit 6. In detail, after the first detection unit 3 detects that the peduncle Fs is within the cuttable range P1, when the control unit 300 detects that the pair of blade units 10 are closed on the basis of the detection result of the third detection unit 6, the control unit 300 determines that the peduncle Fs is cut. In a case where the control unit 300 does not detect that the pair of blade units 10 are closed, the control unit 300 determines that the peduncle Fs is not cut.

In the following, a first practical example to a third practical example of the third detection unit 6 will be described. At least portions of the first practical example to the third practical example can be arbitrarily combined with each other, unless there is a particular contradiction.

### <3-2-1. First Practical Example of Third Detection Unit 6>

In the first practical example, a third detection unit 6 detects at least one of the following: whether or not a pair of handles 112 and 122, which face each other, come into contact with each other; and whether or not a blade body and a facing body of the cutting unit 1, which face each other, (e.g., a pair of blade units 10) come into contact with each other.

For example, whether or not the pair of blade units 10 are closed is detected on the basis of whether or not the pair of handles 112 and 122 are closed or not. In configurations of FIG. 11 and FIG. 12, when the pair of blade units 10 are closed, the pair of handles 112 and 122 are also closed. That is, an end of on the rightward direction D2b side of the right handle 112 is in contact with an end on the leftward direction D2a side of the left handle 122. In the first practical example, this behavior is used to detect whether or not the pair of blade units 10 are closed (i.e., whether or not a peduncle Fs is cut).

For example, the third detection unit 6 has a pair of electrodes 61 and 62, as illustrated in FIG. 11, FIG. 12, and the like. The electrode 61 is disposed in the right handle 112. In this embodiment, the electrode 61 is disposed at an end on the rightward direction D2b side of the right handle 112. The electrode 62 is disposed in the left handle 122 and faces the electrode 62 in the left-right direction D2. In this embodiment, the electrode 62 is disposed at an end on the leftward direction D2a side of the left handle 122. The placement of the electrodes 61 and 62 is not limited to the above example, so long as the electrodes 61 and 62 are conductive when the pair of handles 112 and 122 are closed. For example, the pair of electrodes 61 and 62 may be disposed on the upward direction D3a side (e.g., an upper surface) or the downward direction D3b side (e.g., a lower surface) of the handles 112 and 122.

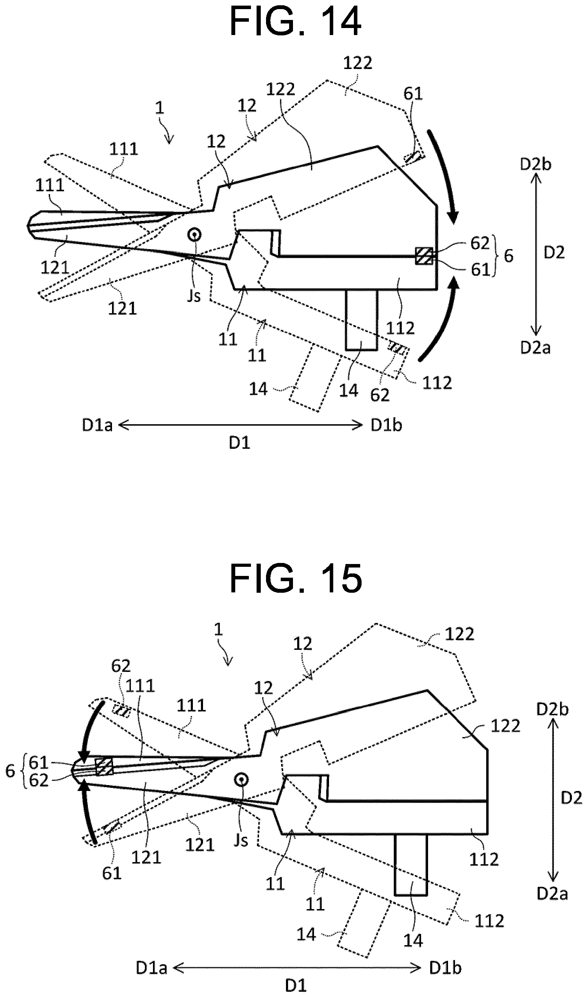

FIG. 14 is a schematic diagram illustrating a state of the pair of handles 112 and 122 when the pair of blade units 10 are closed in the first practical example. When the pair of handles 112 and 122 are closed by closing of the pair of blade units 10, the pair of electrodes 61 and 62 come into contact with each other and become conductive. That is, the third detection unit 6 detects whether or not the pair of handles 112 and 122 are in contact with each other on the basis of the presence or absence of conduction between the pair of electrodes 61 and 62, and outputs a detection result to a control unit 300. The control unit 300 detects whether or not the pair of blade units 10 are closed on the basis of whether or not the pair of handles 112 and 122 are in contact with each other (in other words, whether or not the electrodes 61 and 62 are conductive).

The present invention is not limited to the above example, and the electrodes 61 and 62 may be disposed relative to the respective blade units 10 (see FIG. 15). For example, the electrode 61 may be disposed on an end surface in the up-down direction D3 of the right blade unit 111 while being insulated from the right blade unit 111. In addition, the electrode 62 facing the electrode 61 may be disposed on an end surface in the up-down direction D3 of the left blade unit 121 while being insulated from the left blade unit 121. In this case, the third detection unit 6 detects whether or not the pair of blade units 10 come into contact with each other, and outputs a detection result to the control unit 300. The control unit 300 detects that the pair of blade units 10 are closed (i.e., that the peduncle Fs is cut) in response to detection of contact between the pair of blade units 10.

### <3-2-2. Second Practical Example of Third Detection Unit 6>

The present invention is not limited to the example described in the first practical example, and a cutting unit 1 may be configured such that when a pair of blade units 10 are closed, there is no contact between a pair of handles 112 and 122 that face each other. In this case, when the pair of blade units 10 are closed, an interval between the pair of handles 112 and 122 narrows to a predetermined value.

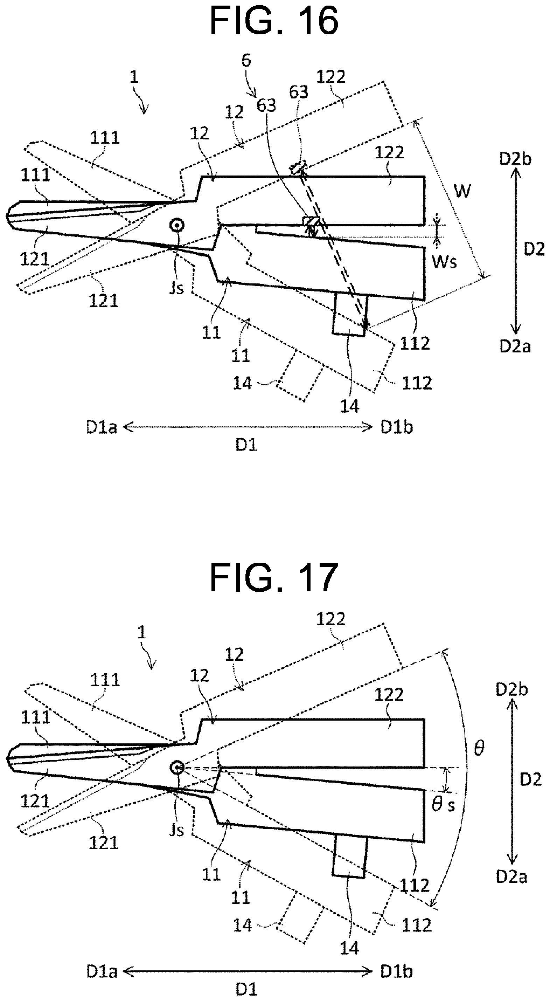

In a second practical example, this behavior is used to detect whether or not the pair of blade units 10 are closed (i.e., whether or not a peduncle Fs is cut). For example, a third detection unit 6 detects at least one of an interval between a blade body and a facing body (e.g., the pair of blade units 10) of the cutting unit 1, which face each other, and the interval between the pair of handles 112 and 122. The above interval may be a linear distance detected by the third detection unit 6 (see FIG. 16) or a circumferential angle interval θ (see FIG. 17) centered on a support shaft Js.

In FIG. 16, the third detection unit 6 of the second practical example has a distance sensor 63. The distance sensor 63 is disposed in one of the pair of handles 112 and 122, and faces a portion of the other handle to detect a distance between the pair of handles 112 and 122, and outputs a detection result to a control unit 300. In FIG. 16, the distance sensor 63 is disposed on an end on the leftward direction D2a side of the left handle 122 and faces a portion of an end on the rightward direction D2b side of the right handle 112 to detect a straight-line distance W between the portion and the distance sensor 63.

When the pair of blade units 10 are closed, the straight line distance W detected by the distance sensor 63 reaches a predetermined value Ws. That is, in FIG. 16, the third detection unit 6 detects the interval (i.e., straight line distance W) between the pair of handles 112 and 122 and outputs a detection result to the control unit 300. The control unit 300 detects whether or not the pair of blade units 10 are closed on the basis of whether the above interval (i.e., straight line distance W) reaches the predetermined value Ws. The predetermined value Ws is the straight line distance W detected by the distance sensor 63 when the pair of blade units 10 are closed sufficiently to cut the peduncle Fs.

The present invention is not limited to the above example, and the distance sensor 63 may be disposed in the one blade unit 10, namely one of the right blade unit 111 and the left blade unit 121, face a portion of the other blade unit 10 to detect the distance between the blade units, and output a detection result to the control unit 300. In this case, the distance sensor 63 of the third detection unit 6 detects the interval (i.e., straight line distance) between the pair of blade units 10 and outputs the detection result to the control unit 300. The control unit 300 detects that the pair of blade units 10 are closed (i.e., the peduncle Fs is cut) in response to detection that the straight line distance detected by the distance sensor 63 reaches the predetermined value (e.g., 0).

Alternatively, the third detection unit 6 in the second practical example may have an angle sensor 64. For example, the angle sensor 64 detects the circumferential angle interval θ centered on the support shaft Js either between the pair of handles 112 and 122 or between the pair of blade units 10, and outputs a detection result to the control unit 300. The circumferential angle interval θ may be, for example, a difference in the circumferential angle formed by the end on the rightward direction D2b side of the right handle 112 and the end on the leftward direction D2a side of the left handle 122 (see FIG. 17), or may be a difference in the circumferential angle formed by an end on the rightward direction D2b side of the right blade unit 111 and an end on the leftward direction D2a side of the left blade unit 121. The angle sensor 64 is not particularly limited, but may be, for example, a rotary encoder.

When the pair of blade units 10 are closed, the circumferential angle interval θ detected by the angle sensor 64 reaches a predetermined interval θs. The predetermined interval θs is the circumferential angle interval θ when the pair of blade units 10 are closed sufficiently to cut the peduncle Fs.

In FIG. 17, the angle sensor 64 detects the circumferential angle interval θ between the pair of handles 112 and 122 and outputs the detection result to the control unit 300. The control unit 300 detects that the pair of blade units 10 are closed (i.e., that the peduncle Fs is cut) in response to detection that the above circumferential angle interval θ reaches the predetermined interval θs.

The present invention is not limited to the above example, and the angle sensor 64 may detect the circumferential angle interval θ between the blade body and the facing body (e.g., a pair of blade units 10) of the cutting unit 1, which face each other, and may output the detection result to the control unit 300. In addition, in a case where the angle sensor 64 detects the circumferential angle interval between the pair of blade units 10, the predetermined interval θs = 0 is established. In this case, the control unit 300 detects that the pair of blade units 10 are closed (i.e., that the peduncle Fs is cut) in response to detection that the above circumferential angle interval θ reaches the predetermined interval θs (e.g., 0 [degree]).

Alternatively, the third detection unit 6 may detect the interval between the pair of handles 112 and 122 or the interval between the pair of blade units 10 (the linear straight line distance W, the circumferential angle interval θ) from a drive amount of the cutting unit 1 by the drive unit 14. Thus, the control unit 300 can detect whether or not the pair of blade units 10 are closed (i.e., whether or not the peduncle Fs is cut) on the basis of the detection result of the third detection unit 6 for the above interval.

### <3-2-3. Third Practical Example of Third Detection Unit 6>

Whether or not a pair of blade units 10 are closed may be detected on the basis of external force that acts on at least one of a blade body and a facing body of a cutting unit 1, which face each other, (for example, at least one of the blade units 10). For example, when the pair of blade units 10 are closed to cut a peduncle Fs, external force of a certain magnitude acts on the blade units 10 from the peduncle Fs. On the other hand, after the peduncle Fs is cut, the external force is greatly and rapidly reduced. In addition, when the peduncle Fs does not abut against the blade units 10, no external force acts on the blade units 10 from the peduncle Fs. In the third practical example, this behavior is used to detect whether or not the pair of blade units 10 are closed (i.e., whether the peduncle Fs is cut).

For example, the third detection unit 6 has a load sensor 65 (see FIG. 13). The load sensor 65 directly detects the external force that acts on the blade units 10 and outputs the detection to a control unit 300. Alternatively, the load sensor 65 detects load or its increment applied to a drive unit 14 when the blade units 10 are driven as external force that acts on the blade units 10, and outputs the detection to the control unit 300.

The control unit 300 determines that the peduncle Fs is cut when the external force which acts on the blade units 10 increases to or above a first predetermined value and then changes to or below a second predetermined value that is lower than the first predetermined value. Normally, the peduncle Fs separates from the blade units 10 after the peduncle Fs is cut, and therefore no external force acts on the blade units 10. However, even after the peduncle Fs is cut, weak external force may act on the blade units 10 when an end of the cut peduncle Fs or a branch B of a fruit tree gets caught on the blade units 10. Therefore, the second predetermined value does not have to be 0. However, this example does not exclude a configuration in which the second predetermined value is 0.

Alternatively, the control unit 300 may determine the cutting of the peduncle Fs according to the amount of change per unit time of the external force detected by the load sensor 65. For example, when the pair of blade units 10 cuts off the peduncle Fs, the external force that acts on the blade units 10 increases rapidly. On the other hand, after the peduncle Fs is cut off, the external force that acts on the blade units 10 decreases rapidly. Therefore, when the external force that acts on the blade units 10 increases to or above a first predetermined value or increases at or above a predetermined increase rate, and then the external force decreases at or below a predetermined decrease rate, the control unit 300 determines that the peduncle Fs is cut.

### <4. Remarks>

The embodiment of the present invention is described above. It should be understood by those skilled in the art that the above embodiments are merely example, and that various modifications are possible in the combination of each component and each process, and that these modifications are within the scope of the present invention.

### <5. Summary>

The embodiments described so far will be summarized below.

For example, the harvesting device 100 disclosed in this specification includes:
the cutting unit 1 that cuts the peduncle Fs;
the moving mechanism 2 that moves the cutting unit 1 in such a front-rear direction D1 as to approach and separate from the peduncle Fs;
the first detection unit 3 which detects that the peduncle Fs is within the cuttable range P1; and
the drive unit 14 that moves the cutting unit 1 toward the cuttable range P1 in a case where the first detection unit 3 detects that the peduncle Fs is within the cuttable range P1 (first configuration).

In the harvesting device 100 having the above first configuration,
the first detection unit 3 may have:
   the antenna unit 31 that is capable of advancing and retreating in the front-rear direction D1, and contacts the peduncle Fs;
   the urging members 33 that urge the antenna unit 31 in the one direction D1a of the front-rear direction approaching the peduncle Fs; and
   the sensor 34 that detects the retreat amount of the antenna unit 31 in the other direction D1b of the front-rear direction away from the peduncle Fs with respect to the cutting unit 1,
the moving mechanism 2 may move the antenna unit 31 in the front-rear direction D1 together with the cutting unit 1, and
on the basis of a detection result of the sensor 34, it may be determined whether or not the peduncle Fs is within the cuttable range P1 in the front-rear direction D1 (second configuration).

In the harvesting device 100 having the above second configuration,
the antenna unit 31 may be located on the base end side with respect to the tip of the cutting unit 1, when the antenna unit 31 is not in contact with the peduncle Fs (third configuration).

In the harvesting device 100 having the above second or third configuration,
when a movement amount of the antenna unit 31 in the other direction D1b of the front-rear direction with respect to the cutting unit 1 is equal to or greater than a threshold value, the drive unit 14 may move the cutting unit 1 toward the cuttable range P1 (fourth configuration).

In the harvesting device 100 having any of the above second to fourth configurations,
the cutting unit 1 may have the scissors 111 and 121, and
at least a portion of the antenna unit 31 may be disposed at such a position as to overlap with the scissors 111 and 121 in top view, and
the drive unit 14 may move the blade unit 10 toward the cuttable range P1 (fifth configuration).

In the harvesting device 100 having any of the above second to fifth configurations,
the antenna unit 31 may face the cutting unit 1 with a gas in the up-down direction D3 (sixth configuration).

In the harvesting device 100 having any of the above second to sixth configurations,
the antenna unit 31 may have the contact part 312 that extends in the width direction D2 and is capable of contacting the peduncle Fs, and
the length in the up-down direction D3 of the contact part 312 may be shorter than the length in the width direction D2 of the contact part 312 (seventh configuration).

In the harvesting device 100 having any of the above first to seventh configurations,
the cutting unit 1 may have the blade unit 10, and
the drive unit 14 may move the blade unit 10 toward the cuttable range P1 (eighth configuration).

The harvesting device 100 having any of the above first to eighth configurations, may further include
the holding unit 4 that holds the fruit F supported by the peduncle Fs (ninth configuration).

The harvesting device 100 having any of the above first to ninth configurations may further include
the second detection unit 5 which detects that the peduncle Fs is in the uncuttable range P2, and
the uncuttable range P2 may a positional range opposite to the cuttable range P1 in the width direction D2 of the cutting unit 1 (tenth configuration).

The harvesting device 100 having any of the above first to tenth configurations may further include
the third detection unit 6 which detects that the cutting unit 1 cuts the peduncle Fs (eleventh configuration).

In the harvesting device 100 having the above eleventh configuration,
the cutting unit 1 may have the scissors 111 and 121, and
on the basis of a detection result of the third detection unit 6, it may be detected whether or not the scissors 111 and 121 are closed (twelfth configuration).

In the harvesting device 100 having the above eleventh or twelfth configuration,
the cutting unit 1 may have
   the blade body with the blade line located at the end on the cuttable range P1 side in the left-right direction; and
   the facing body having the end on the blade body side in the left-right direction which faces the blade line of the blade body,
the third detection unit 6 may detect:
   whether or not the end on the cuttable range P1 side in the left-right direction of the blade body, and the end on the blade body side in the left-right direction of the facing body come into contact with each other;
   an interval between the end on the cuttable range P1 side in the left-right direction of the blade body and the end on the blade body side in the left-right direction of the facing body; or
   external force which acts on at least one of the blade body and the facing body (thirteenth configuration).

In the harvesting device 100 having any of the above eleventh to thirteenth configurations,
the cutting unit 1 may have:
   the blade body with the blade line located at the end on the cuttable range P1 side in the left-right direction;
   the facing body having the end on the blade body side in the left-right direction which faces the blade line of the blade body; and
   a pair of the handles 112 and 122 that extend from the blade body and the facing body in the other direction D1b of the front-rear direction away from the peduncle Fs, and face each other, and
the third detection unit 6 may detect:
   whether or not a pair of the handles 112 and 122 come into contact with each other; or
   an interval between a pair of the handles 112 and 122 (fourteenth configuration).

In the harvesting device 100 having any of the above first to fourteenth configurations,
the cutting unit 1 may be movable in a width direction D2 of the cutting unit 1 with respect to the moving mechanism 2 (fifteenth configuration).

In the harvesting device 100 having the above fifteenth configuration,
the moving mechanism 2 may further have the restoration mechanism 28 that returns, to a reference position in the width direction D2 of the cutting unit, the cutting unit which moves from the reference position (sixteenth configuration).

In the harvesting device 100 having any of the above first to sixteenth configurations,
the cutting unit 1 may be rotatable around the rotating shaft J3 parallel to the width direction D2 of the cutting unit 1 (seventeenth configuration).

In the harvesting device 100 having any of the above first to seventeenth configurations,
the moving mechanism 2 may have:
   the holding member 271 that holds the cutting unit 1 and the first detection unit 3; and
   the arms 252 that are aligned with the holding member 271 in the width direction D2 of the cutting unit 1, and
the arms 252 may movably support the holding member 271 in the width direction D2 of the cutting unit 1 (eighteenth configuration).

In the harvesting device 100 having the above eighteenth configuration,
the moving mechanism 2 may further have the elastic materials 281 that are disposed between the holding member 271 and the arms 252, and returns, to a reference position in the width direction D2 of the cutting unit 1, the cutting unit 1 which moves from the reference position (nineteenth configuration).

In the harvesting device 100 having any of the above eighteenth or nineteenth configuration,
the holding member 271 may be rotatable with respect to the arms 252 in the direction (for example, the up-down direction D3) perpendicular to the front-rear direction D1 and the width direction D2 of the cutting unit 1 together with the cutting unit 1 and the first detection unit 3 (twentieth configuration).

### REFERENCE SIGNS LIST

100 harvesting device
101 attachment
1011 plate part
1012 holder
1013 bracket
102 imaging unit
103, 103a, 103b column
200 storage unit
300 control unit
1 cutting unit
10 blade unit
10a blade line
11 right cutting member
111 right blade unit
112 right handle
12 left cutting member
121 left blade unit
122 left handle
13 blade cover member
14 drive unit
2 moving mechanism
21 rod
22 guide member
23 drive unit
24 bracket
25 arm hinge
251 bar
252 arm
26 hinge (holding member)
261 guide hole
27 movable mechanism
271 hinge (holding member)
2711 cylinder
2712 connecting part
2713 guide hole
272 shaft member
273 bushing
28 restoration mechanism
281 elastic material
282 plate part
3 first detection unit
31 antenna unit
311 support member
312 contact part
32 rod
33 urging member
34 sensor
4 holding unit
41 pump holder
42 suction pump
43 pad holder
44 suction pad
441 suction hole
5 second detection unit
51 right detection unit
52 left detection unit
6 third detection unit
61 first electrode
62 second electrode
63 distance sensor
64 angle sensor
65 load sensor
F fruit
Fs peduncle
B branch
Js support shaft
11, J2 axis
J3 rotating shaft
P1 cuttable range
P2, P2a, P2b uncuttable range
D1 front-rear direction
D1a front direction (one direction of the front-rear direction)
D1b rear direction (other direction of the front-rear direction)
D2 left-right direction (width direction of cutting unit 1)
D2a leftward direction (one direction of width direction)
D2b rightward direction (other direction of width direction)
D3 up-down direction
D3a upward direction (one direction of up-down direction)
D3b downward direction (other direction of up-down direction)

## Claims

1. A harvesting device comprising:
a cutting unit that cuts a peduncle;
a moving mechanism that moves the cutting unit in a front and rear direction to approach and separate from the peduncle;
a first detection unit which detects that the peduncle is within a cuttable range; and
a drive unit that moves the cutting unit toward the cuttable range in a case where the first detection unit detects that the peduncle is within the cuttable range.

2. The harvesting device according to claim 1, wherein
the first detection unit has:
an antenna unit that is capable of advancing and retreating in the front-rear direction, and contacts the peduncle;
an urging member that urges the antenna unit in one direction of the front-rear direction approaching the peduncle; and
a sensor that detects a retreat amount of the antenna unit in the other direction of the front-rear direction away from the peduncle with respect to the cutting unit,
the moving mechanism moves the antenna unit in the front-rear direction together with the cutting unit, and
on the basis of a detection result of the sensor, it is determined whether or not the peduncle is within the cuttable range in the front-rear direction.

3. The harvesting device according to claim 2, wherein
the antenna unit is located on a base end side with respect to a tip of the cutting unit, when the antenna unit is not in contact with the peduncle.

4. The harvesting device according to claim 2, wherein
when a movement amount of the antenna unit in the other direction of the front-rear direction with respect to the cutting unit is equal to or greater than a threshold value, the drive unit moves the cutting unit toward the cuttable range.

5. The harvesting device according to claim 2, wherein
the cutting unit has scissors, and
at least a portion of the antenna unit is disposed at such a position as to overlap with the scissors in top view.

6. The harvesting device according to claim 2, wherein
the antenna unit faces the cutting unit with a gap in an up-down direction.

7. The harvesting device according to claim 2, wherein
the antenna unit has a contact part that extends in a width direction and is capable of contacting the peduncle, and
a length in an up-down direction of the contact part is shorter than a length in the width direction of the contact part.

8. The harvesting device according to claim 1, wherein
the cutting unit has a blade unit, and
the drive unit moves the blade unit toward the cuttable range.

9. The harvesting device according to claim 1, further comprising a holding unit that holds a fruit supported by the peduncle.

10. The harvesting device according to any one of claims 1 to 9, further comprising
a second detection unit which detects that the peduncle is in an uncuttable range, wherein
the uncuttable range is a positional range opposite to the cuttable range in a width direction of the cutting unit.

11. The harvesting device according to any one of claims 1 to 9, further comprising
a third detection unit which detects that the cutting unit cuts the peduncle.

12. The harvesting device according to claim 11, wherein
the cutting unit has scissors, and
on the basis of a detection result of the third detection unit, it is determined whether or not the scissors are closed.

13. The harvesting device according to claim 11, wherein
the cutting unit has
a blade body with a blade line located at an end on the cuttable range side in a left-right direction; and
a facing body having an end on the blade body side in the left-right direction which faces the blade line of the blade body,
the third detection unit detects:
whether or not the end on the cuttable range side in the left-right direction of the blade body, and the end on the blade body side in the left-right direction of the facing body come into contact with each other;
an interval between the end on the cuttable range side in the left-right direction of the blade body and the end on the blade body side in the left-right direction of the facing body; or
external force which acts on at least one of the blade body and the facing body.

14. The harvesting device according to claim 11, wherein
the cutting unit has:
a blade body with a blade line located at an end on the cuttable range side in a left-right direction;
a facing body having an end on the blade body side in the left-right direction which faces the blade line of the blade body; and
a pair of handles that extend from the blade body and the facing body in the other direction of the front-rear direction away from the peduncle, and face each other, and
the third detection unit detects:
whether or not a pair of the handles come into contact with each other; or
an interval between a pair of the handles.

15. The harvesting device according to any one of claims 1 to 9, wherein
the cutting unit is movable in a width direction of the cutting unit with respect to the moving mechanism.

16. The harvesting device according to claim 14, wherein
the moving mechanism further has a restoration mechanism that returns the cutting unit which has moved from a reference position in a width direction of the cutting unit, to the reference position.

17. The harvesting device according to one of claims 1 to 9, wherein
the cutting unit is rotatable around a rotating shaft parallel to a width direction of the cutting unit.

18. The harvesting device according to claim 1, wherein
the moving mechanism has:
a holding member that holds the cutting unit and the first detection unit; and
an arm that is aligned with the holding member in a width direction of the cutting unit, and
the arm movably supports the holding member in the width direction of the cutting unit.

19. The harvesting device according to claim 18, wherein
the moving mechanism further has an elastic material that is disposed between the holding member and the arm, and returns the cutting unit which has moved from a reference position in the width direction of the cutting unit, to the reference position.

20. The harvesting device according to claim 18, wherein
the holding member is rotatable with respect to the arm in a direction perpendicular to the front-rear direction and the width direction of the cutting unit together with the cutting unit and the first detection unit.
